# EUROPEAN PATENT SPECIFICATION

(11) **EP 0 402 405 B1**
(45) Date of publication and mention of the grant of the patent: **15.12.1993**
(21) Application number: 89903471.4
(22) Date of filing: 02.03.1989
(51) Int. Cl.: C10J 3/00, C01B 3/26

(54) **GASIFICATION PROCESS**
VERGASUNGSVERFAHREN
PROCEDE DE GAZEIFICATION

(30) Priority: 02.03.1988 DE 3806732
(43) Date of publication of application: 19.12.1990
(73) Proprietor: ANDERSEN, Kjeld, D-25588 Mehlbek (DE)
(72) Inventor: ANDERSEN, Kjeld, D-25588 Mehlbek (DE)
(74) Representative: Schoenning, Soeren
(86) International application number: DK8900048
(87) International publication number: WO8908138

(56) References cited:
- DE-A- 3 705 781
- US-A- 4 113 446

## Description

This invention relates to a catalytic process for converting an organic material into a gas by heating the organic material in liquid water to a temperature of from 200 to 450°C at a pressure of from 5.1 to 35.5 MPa (50 to 350 atmospheres) in the presence of a catalyst comprising a compound of an element of group IA of the Periodic Table of Elements.

US patent specification No. 4.113.446 discloses a process of preparing a gas composition having a high heating value, which process comprises reacting a liquid or solid organic material with water at a temperature of at least 647°K and at a pressure of at least 22.1 MPa (218 atmospheres) to achieve the critical density of water. The reaction is preferably carried out in the presence of a catalyst such as a hydrogenation catalyst.

Since the reaction is conducted at the critical density of water, salts present in the material to be gasified will not be removed together with the effluent and will consequently accumulate in the reactor used so that the operation has to be stopped at intervals to remove accumulated salts.

The published German patent application No. 37 05 781 discloses a process of the above-mentioned type. The composition of the gas produced by the prior art process depends on the composition of the starting material and the specific operational conditions used, but ordinarily the gas produced contains a mixture of carbon dioxide, carbon monoxide and methane and other low molecular weight hydrocarbons. In such a liquid phase reaction salts can be removed from the reactor together with the liquid effluent so that an accumulation of the salts can be avoided.

The gas is suitable for use as a synthesis gas, e.g. a gas for the synthesis of methanol or hydrocarbons.

The prior art process suffers from the drawback that the product gas may contain char, coke, tar and/or oils, which tend to be deposited on the catalyst and on the walls of the reaction chamber.

The invention is based on the discovery that organic materials can be gasified with little or no formation of char, coke and/or tar by heating the organic material in water in the presence of a catalyst, which further comprises a compound of an element of group IVB of the Periodic Table of Elements.

In a particularly preferred embodiment of the process of the invention the group IVB compound is ZrO₂, which is stable under the severe temperature used and which consequently can be reused.

The reaction is preferably carried out at a temperature of from 270 to 380°C and at a pressure of from 15.2 to 27.4 MPa (150 to 270 atmospheres).

The organic material is preferably intimately mixed with the water. When employing a solid organic material such as coal or waste materials it is preferred that the solid is in the form of small particles and that the reaction is conducted so that the organic particles and water are formed and maintained as a slurry.

Any organic solid material can be employed herein such as garbage, paper, sawdust, dried sludge and other waste materials, cellulose waxes, coal, shale and the like. Also liquid organic materials such as sugars can be employed.

The weight ratio of organic material to water should be maintained at such a level that there is sufficient hydrogen available from the water to promote reforming and to prevent the formation of char or coke.

Generally the organic material will comprise from about 1 to about 50 percent by weight of the water.

The catalyst is preferably used in an amount of from about 5 to about 30% by weight based on the weight of the organic material. The ratio of group IA compound to IVB compound is preferably in the range of 0.01:1 to 0.5:1.

The process can be carried out as either a batch process or as a continuous process.

In a continuous process a reaction slurry or a liquid mixture of the two reactants is fed to the reactor under heat and pressure and the product gas is drawn off continuously under high pressure thus eliminating the need of pressurizing the product gas in case it is to be used in a high pressure process.

The reaction may be carried out in a vertical cylindrical reactor having an inlet for the introduction of starting material and water at the bottom of the reactor, an outlet for the gas formed at the top of the reactor and an outlet for water provided in the upper part of the reactor.

The water removed through the latter outlet is preferably recycled and mixed with the incoming organic material.

It is advantageous to preheat the organic material, e.g. to a temperature of about 100°C, before it is mixed with the recycled water.

The process of the invention is also suitable for converting poisonous organic material such as halogenated hydrocarbons into non-poisonous compounds.

The invention will now be described in further detail with reference to the following examples.

### Example 1

100 g barley straw were mixed with 900 ml ZrO₂ (in the form of tablets with a diameter of 3 mm and a surface area of 50 m²/g) and the mixture was introduced into a tubular reactor having a volume of 2 l. Subsequently, 500 ml water and 10 g K₂CO₃ were introduced therein.

The reactor was then closed and heated to a temperature of 360°C at a pressure of 22.3 MPa (220 atmospheres) for 5 minutes. The conversion of the 100 g barley straw resulted in a gas having the following composition:

| | |
|---|---|
| CO₂ | 59.9% (w/w) |
| H₂ | 0.2% (w/w) |
| C₁-C₄ hydrocarbons | 2.8% (w/w) |
| Methanol | 21.0% (w/w) |
| Ethanol | 6.8% (w/w) |
| Acetone | 4.0% (w/w) |
| Propanol | 3.0% (w/w) |
| Butanol | 2.0% (w/w) |
| Total | 1̅0̅0̅.̅3̅%̅ (̅w̅/̅w̅)̅ |

The reactor contained no tar, oil, coke or other solid decomposition products.

### Example 2

320 g sewage corresponding to 100 g dry sludge were mixed with 900 ml of the same catalyst as described in example 1 and 12 g K₂CO₃ in 380 g H₂O and the mixture was transferred to the above-mentioned reactor and tested under the same conditions as mentioned in example 1. 100 g dried sludge gave the following yields: CO₂ = 29.0 g, CO = 0.05 g, H₂ = 0.1 g, C₁-C₄-hydrocarbons = 1.1 g. Less than 1% alcohols was formed, and approximately 23 g of other organic compounds were found in the condensate. No coke, char or tar was desposited on the catalyst or on the reactor wall.

### Example 3

This test was performed to show that this invention also may be applied for converting poisonous organic compounds in waste water into gasses and other non-poisonous organic compounds. The test was performed in a tubular reactor with a volume of 680 ml. 2.2 l of an aqueous solution containing the following compounds:

| | |
|---|---|
| Trichlorethane | 0.14% (w/w) |
| Nitrobenzene | 0.13% (w/w) |
| Chlorphenol | 0.14% (w/w) |

and 2.0% (w/w) of K₂CO₃ were introduced into the reactor used in example 3 and was heated to a temperature of 360°C at a pressure of 22.8 MPa (225 atmospheres) in the presence of 650 ml of ZrO₂ with a surface area of 4 m²/g and a particle size of from 2-5 mm. The test gave the following conversion data.

| | |
|---|---|
| Trichlorethane | 100% conversion |
| Nitrobenzene | 100% conversion |
| Chlorphenol | 83% conversion |

### Comparison Example

100 g barley straw and 630 ml of water containing 12.6 g K₂CO₃ were placed in the reactor described in example 1. The test was then performed as described in example 1 and the following yields were obtained. CO₂ = 24 g, CO = 0.3 g, H₂ = 0.6 g, C₁-C₄-hydrocarbons = 4.6 g. 14 g of other organic compounds were found in the condensate. By opening the reactor it was found that the whole reactor wall was covered with coke. The deposited coke corresponded to 5.2 g carbon or 12% of the total carbon in the feed.

## Claims

1. A catalytic process for converting an organic material into a gas by heating the organic material in liquid water to a temperature of from 200 to 450°C at a pressure of from 5.1 to 35.5 MPa (50 to 350 atmospheres) in the presence of a catalyst comprising a compound of an element of group IA of the Periodic Table of Elements, **characterized** in that the catalyst further comprises a compound of an element of group IVB of the Periodic Table of Elements.

2. A process according to claim 1, **characterized** in that the group IV compound is zirconium dioxide.

3. A process according to claim 1 or 2, **characterized** in that the reaction is carried out at a temperature of from 270 to 380°C.

4. A process according to claim 1-3, **characterized** in that the reaction is carried out at a pressure of from 15.2 to 27.4 MPa (150 to 270 atmospheres).

5. A process according to any of the preceeding claims, **characterized** in that the organic material comprises from about 1 to about 50% by weight of the water.

6. A process according to any of the preceeding claims, **characterized** in that the catalyst is used in an amount of from about 5 to about 30% by weight of the organic material.

7. A process according to any of the preceeding claims, **characterized** in that the ratio of group IA compound to group IVB compound is in the range of 0.01:1 to 0.5:1.

## Patentansprüche

1. Katalytisches Verfahren zum Umsetzen eines organischen Materials in ein Gas durch Erhitzen des organischen Materials in Wasser in flüssigem Zustand auf eine Temperatur von 200 bis 450°C bei einem Druck von 5.1 bis 35.5 MPa (50 bis 350 Atmosphären) in Gegenwart eines Katalysators umfassend eine Verbindung eines Elements der Gruppe IA der Tabelle des periodischen Systems, dadurch **gekennzeichnet,** dass der Katalysator ferner eine Verbindung eines Elements der Gruppe IVB der Tabelle des periodischen Systems umfasst.

2. Verfahren nach Anspruch 1, dadurch **gekennzeichnet,** dass die Gruppe IV Verbindung Zirkoniumdioxyd ist.

3. Verfahren nach Anspruch 1 oder 2, dadurch **gekennzeichnet,** dass die Reaktion bei einer Temperatur von 270 bis 380°C durchgeführt wird.

4. Verfahren nach Anspruch 1-3, dadurch **gekennzeichnet,** dass die Reaktion bei einem Druck von 15.2 bis 27.4 MPa (150 bis 270 Atmosphären) durchgeführt wird.

5. Verfahren nach einem der vorhergehenden Ansprüche, dadurch **gekennzeichnet,** dass das organische Material etwa 1 bis 50 Gew.-% Wasser umfasst.

6. Verfahren nach einem der vorhergehenden Ansprüche, dadurch **gekennzeichnet,** dass der Katalysator in einer Menge von etwa 5 bis 30 Gew.-% des organischen Materials verwendet wird.

7. Verfahren nach einem der vorhergehenden Ansprüche, dadurch **gekennzeichnet,** dass das Verhältnis der Gruppe IA Verbindung zur Gruppe IVB Verbindung im Bereich von 0,01:1 bis 0,5:1 ist.

## Revendications

1. Procédé catalytique de transformation d'un matériau organique en un gaz par chauffage du matériau organique dans de l'eau liquide jusqu'à une température de 200 à 450°C sous une pression de 5,1 à 35,5 MPa (50 à 350 atm.) en présence d'un catalyseur comprenant un composé d'un élément du groupe Ia de la Classification Périodique des Eléments, **caractérisé** en ce que le catalyseur comprend, de plus, un composé d'un élément du groupe IVb de la Classification Périodique des Eléments.

2. Procédé selon la revendication 1, **caractérisé** en ce que le composé du groupe IV est du dioxyde de zirconium.

3. Procédé selon les revendications 1 ou 2, **caractérisé** en ce que la réaction est conduite à une température entre 270 et 380°C.

4. Procédé selon les revendications 1 à 3, **caractérisé** en ce que la réaction est conduite sous une pression de 15,2 MPa à 27,4 MPa (150 à 270 atm.).

5. Procédé selon l'une quelconque des revendications précédentes, **caractérisé** en ce que le matériau organique comprend entre environ 1 et environ 50% en poids d'eau.

6. Procédé selon l'une quelconque de revendications précédentes, **caractérisé** en ce que le catalyseur est utilisé sous une quantité allant d'environ 5 à environ 30 % en poids du matériau organique.

7. Procédé selon l'une quelconque de revendications précédentes, **caractérisé** en ce que le rapport entre composé du groupe Ia et composé du groupe IVb s'établit dans la gamme allant de 0,01/1 à 0,5/1.
